# FASCICULE DE BREVET EUROPEEN

(11) **EP 0 987 941 B1**
(45) Date de publication et mention de la délivrance du brevet: **08.05.2002**
(21) Numéro de dépôt: 98929539.9
(22) Date de dépôt: 10.06.1998
(51) Int. Cl.: A01N 1/02

(54) **PERFECTIONNEMENT AUX PROCEDES DE PREPARATION D'EMBRYONS D'EQUIDES EN VUE DE LEUR CRYOCONSERVATION**
VERBESSERTES VERFAHREN ZUR KRYOPRESERVIERUNG VON PFERDEEMBRYONEN
IMPROVEMENTS TO METHODS FOR PREPARING EQUINE EMBRYOS FOR CRYOPRESERVATION

(30) Priorité: 10.06.1997 FR 9707311
(43) Date de publication de la demande: 29.03.2000
(73) Titulaire: Legrand, Emmanuel, 61200 Sévigny (FR); Legrand, René, 61220 Sévigny (FR); Legrand, Richard, 61220 Sévigny (FR); Legrand, Corinne, 61220 Sévigny (FR); Legrand, Jean-Pierre, 61220 Sévigny (FR); Legrand, Odile, 61220 Sévigny (FR)
(72) Inventeur: Legrand, Emmanuel, 61200 Sévigny (FR); Legrand, René, 61220 Sévigny (FR); Legrand, Richard, 61220 Sévigny (FR); Legrand, Corinne, 61220 Sévigny (FR); Legrand, Jean-Pierre, 61220 Sévigny (FR); Legrand, Odile, 61220 Sévigny (FR)
(74) Mandataire: Phélip, Bruno
(86) Numéro de dépôt international: FR9801190
(87) Numéro de publication internationale: WO9856246

(56) Documents cités:
- BIOLOGICAL ABSTRACTS, vol. 98, Philadelphia, PA, US; abstract no. 217946, HOCHI S-I ET AL: "Influence of relative embryonic volumes during glycerol equilibration on the survival of frozen - thawed equine blastocysts." XP002058394 & JOURNAL OF REPRODUCTION AND DEVELOPMENT 40 (3). 1994. 243-249.,
- BIOLOGICAL ABSTRACTS, vol. 97, Philadelphia, PA, US; abstract no. 024614, HINRICHS K: "Embryo transfer in the mare: A status report." XP002058395 & ANIMAL REPRODUCTION SCIENCE 33 (1-4). 1993. 227-240. ISSN: 0378-4320,
- BIOLOGICAL ABSTRACTS, vol. BA95, Philadelphia, PA, US; abstract no. 128770, ORIOL J G ET AL: "MUCIN-LIKE GLYCOPROTEINS IN THE EQUINE EMBRYONIC CAPSULE." XP002058396 & MOL REPROD DEV 34 (3). 1993. 255-265. CODEN: MREDEE ISSN: 1040-452X,
- BIOLOGICAL ABSTRACTS, vol. BA90, Philadelphia, PA, US; abstract no. 130438, HEHNKE K E ET AL: "FORMATION AND CHARACTERIZATION OF VESICLES FROM DAY-10 HORSE CONCEPTUSES." XP002058397 & THERIOGENOLOGY 34 (4). 1990. 709-720. CODEN: THGNBO ISSN: 0093-691X,
- BIOLOGICAL ABSTRACTS, vol. BA81, Philadelphia, PA, US; abstract no. 296, YAMAMOTO Y ET AL: "FROZEN STORAGE OF EQUINE EMBRYOS." XP002058398 & J FAC AGRIC HOKKAIDO UNIV 62 (2). 1985. 182-210. CODEN: JFAGAI ISSN: 0018-344X,

## Description

La présente invention concerne le domaine de la conservation des embryons par le froid; elle concerne plus particulièrement un perfectionnement aux procédés de préparation des embryons d'équidés pour leur cryoconservation (congélation ou vitrification), notamment en vue d'une transplantation ultérieure.

La congélation embryonnaire lors des transferts d'embryons présente de nombreux avantages. Elle permet, entre autre, de supprimer l'obligation de synchroniser les cycles oestraux entre la donneuse et la receveuse ; elle facilite le transport des embryons sur de longues distances et elle rend également possible la création de banques d'embryons, en particulier pour des animaux d'exception ou en voie de disparition.

Après les premiers succès dans les années 1970, la congélation des embryons est maintenant devenue une technique de routine chez les ruminants domestiques, notamment les bovins.
Des travaux parallèles réalisés dans le domaine équin ont permis d'aboutir aux premières naissances de poulains issus du transfert d'embryons congelés dans le début des années 1980.

D'un point de vue biologique, la fécondation de l'embryon équin se produit dans l'oviducte, à la jonction entre l'ampoule et l'isthme, généralement 12 heures après l'ovulation. L'embryon se développe alors dans l'oviducte ; il passe du stade zygote unicellulaire, d'une taille de 100 à 160 µm, au stade «morula» à partir de 16 à 32 cellules (150 à 200 µm). Les divisions mitotiques se font d'abord simultanément dans les différents blastomères, puis de façon de plus en plus asynchrones. La phase de développement de l'embryon équin dans l'oviducte dure 5 jours environ.
Le stade «blastocyste» succède au stade «morula» environ au moment où l'embryon passe dans l'utérus. C'est à ce stade qu'a lieu la différenciation entre deux populations cellulaires : le trophoblaste et la masse cellulaire interne (MCI) qui donnera le foetus.

A ce stade, l'embryon se compose d'une cavité liquidienne (le blastocoele), entouré d'une couche cellulaire (le trophoblaste), auprès de laquelle se situe la masse cellulaire interne (MCI). A la périphérie de l'embryon, deux structures acellulaires peuvent s'observer: la zone pellucide et la capsule.
La zone pellucide a une épaisseur de l'ordre de 15 à 30 µm; elle est constituée d'une couche interne, dense, avec un petit nombre de fins canaux, et d'une couche externe comportant de larges lacunes. Cette zone pellucide est présente sur l'ovocyte et elle disparaît vers le 7^{ème} ou le 8^{ème} jour.
La capsule est caractéristique des embryons d'équidés. Elle se forme environ dans les 8 heures après l'entrée de l'embryon dans l'utérus, entre le trophoblaste et la zone pellucide. Cette capsule est de nature glycoprotéique ; son épaisseur augmente régulièrement jusqu'à un pic vers le 18^{ème} jour; elle décline ensuite jusqu'à disparition vers le 22^{ème} jour, à peu près au moment où l'embryon se fixe dans l'utérus.

La récolte des embryons en vue de leur congélation doit être réalisée avant qu'ils ne se fixent dans l'utérus. Le moment adéquat est évalué, après la saillie ou l'insémination, par palpation transrectale et selon les données d'un examen par échotomographie.
Cette récolte peut se faire très tôt après la fécondation, au niveau de l'oviducte, mais cela nécessite alors une opération chirurgicale traumatisante pour l'animal. L'autre solution consiste à attendre que l'embryon ait atteint l'utérus (au-delà du 6^{ème} jour après la fécondation) et à travailler par la voie vaginale, au moyen d'une sonde de récolte adaptée, conformément à la technique de LAGNEAUX D. et al. (1988 «la transplantation embryonnaire chez la jument, CEREOPA, 14^{ème} journée 163-181). Cette sonde permet l'introduction d'un milieu de collecte dans l'utérus (par exemple milieu Dubelcco's phosphate buffered saline (PBS) + 2 g/l d'albumine sérique bovine, disponible chez I.M.V. (Instrument de Médecine Vétérinaire) B.P. 81, 61 L'AIGLE (France)), puis sa récupération avec le ou les possibles embryons. Le milieu de récolte est observé à la loupe binoculaire et, en cas de découverte d'embryon(s), celui-ci ou ceux-ci sont isolés dans une cupule contenant le même milieu (PBS + albumine).
L'embryon est ensuite «préparé» pour supporter l'opération ultérieure de congélation. Cette préparation consiste à le soumettre à l'action d'agents cryoprotecteurs destinés notamment à éviter la formation de cristaux intracellulaires lors de la descente en température. Les agents cryoprotecteurs utilisés peuvent être choisis parmi le glycérol, le diméthylsulfoxyde (DMSO), l'éthylène glycol, ou encore le 1,2 propanediol ; ils sont utilisés à des concentrations de l'ordre de 1 à 2M, pendant des temps de l'ordre de 10 mn à 30 mn (ces temps et concentrations sont adaptés selon l'efficacité de protection désirée tout en prenant en compte la possible toxicité des produits). De préférence, l'embryon est soumis à différents bains de cryoprotecteurs en concentration croissante.

L'embryon est ensuite conditionné dans une paillette plastique avec une petite quantité du milieu correspondant au dernier bain d'agent cryoprotecteur et cette paillette est déposée dans la cuve d'un congélateur programmable à une température de l'ordre de -7°C. Après un temps d'équilibration de l'ordre de 5 à 10 mn, la cristallisation du contenu est induite par contact avec une tige métallique préalablement refroidie dans de l'azote liquide (-196°C). Après un nouveau temps d'équilibration thermique, le programmateur du congélateur fait descendre celui-ci jusqu'à une température de l'ordre de -30°C/-35°C, à raison de -0,1 à 1°C par minute ; à cette température, la paillette est immergée dans l'azote liquide, puis stockée dans une cuve.

La décongélation, avant transfert, est obtenue en plongeant la paillette pendant 1 mn dans un bain-marie à 37°C ; on sort l'embryon et l'opération de retrait de l'agent cryoprotecteur est réalisée par une succession de dilutions dans des bains de concentration décroissante.
L'embryon est alors prêt pour le transfert vers la jument receveuse, De façon classique, deux techniques peuvent être utilisées : la première, chirurgicale, consiste à implanter l'embryon dans l'oviducte ; la seconde, non chirurgicale et correspondant mieux aux objectifs de transferts commerciaux, consiste à déposer l'embryon dans l'utérus en passant le col à l'aide d'une sonde.

La technique qui vient d'être décrite est dérivée de celles utilisées depuis de nombreuses années chez les bovins, et qui permettent, chez ceux-ci, l'obtention de taux de gestation à partir d'embryons congelés, supérieurs à 50 %.

Cependant, dans le domaine équin, les taux de gestation obtenus sont très faibles, seulement de l'ordre de 20 à 30 %.
Sans que l'on ait pu l'expliquer jusqu'à maintenant, l'utilisation de cette technique de congélation chez les équidés entraîne bien souvent des nécroses importantes dans la Masse Cellulaire Interne et le trophoblaste de l'embryon, qui apparaissent à l'origine d'un nombre élevé d'avortements précoces.

L'objectif de la présente invention est de proposer une technique perfectionnée de préparation des embryons en vue de leur cryoconservation, qui permet de diminuer les taux de nécrose liés à ces opérations et qui permet en conséquence de favoriser la gestation ultérieure, lors du transfert de l'embryon.

Le procédé conforme à la présente invention est basé sur la présence de la capsule qui entoure l'embryon pendant la majeure partie du temps où ce dernier se trouve dans l'utérus de la donneuse, et sur l'hypothèse que la présence de cette capsule nuit aux opérations de préparation de l'embryon avant congélation.

Pour obtenir un taux de collecte intéressant, les embryons seront récoltés assez tardivement; ils seront en règle générale au stade blastocyste et entourés d'une capsule.
Dans la suite d'opérations classiques de préparation d'embryons d'équidés en vue de leur cryoconservation, le procédé selon l'invention prévoit, avant de soumettre ledit embryon à l'action d'agents cryoprotecteurs, à lui faire subir un traitement approprié pour supprimer la capsule embryonnaire ou pour augmenter la perméabilité de cette capsule, en vue de renforcer l'action ultérieure dudit ou desdits agents cryoprotecteurs.

Selon une première façon d'opérer, la capsule est détruite ou simplement rendue plus perméable par un traitement chimique ou enzymatique approprié, par exemple à base de collagénase ou de trypsine. Les concentrations des produits utilisés et les temps de contact (traitements en bain) seront adaptés pour lyser au moins partiellement la capsule tout en tenant compte de la toxicité éventuelle des produits pour ne pas altérer l'embryon. Les sites d'action de la trypsine et de la collagénase étant différents, on peut aussi envisager l'utilisation d'un mélange de ces deux enzymes.

Selon une autre technique, la capsule est traitée mécaniquement : elle est enlevée partiellement ou totalement, ou bien elle subit une simple opération de perçage. Ce traitement mécanique est avantageusement précédé d'un traitement chimique ou enzymatique approprié pour fragiliser ladite capsule.

### Exemple 1

L'embryon est récolté 5 à 8 jours après l'ovulation. Après isolement, il est placé dans un bain d'attente (milieu PBS + 2 g/l d'albumine sérique bovine ultrafiltré sur filtre de 0,2 µm pour éviter les contaminations bactériennes).

L'embryon est ensuite placé dans une cupule de 2 ml contenant 1 à 2 ml d'une solution de trypsine à la concentration de 0,2 % (dilution dans un milieu PBS sans calcium ni magnésium), pendant 15 minutes et à température ambiante (de l'ordre de 23°C).
On obtient une destruction ou une fragilisation plus ou moins poussée de la capsule en fonction de la taille d'origine de celle-ci. Un «reste» affiné ou aminci de capsule peut persister autour de l'embryon ; il arrive que cette capsule se déchire intégralement par la simple action enzymatique ou bien on peut compléter ladite action enzymatique par une décapsulation mécanique réalisée au moyen d'une technique de micromanipulation.

Pour diluer l'enzyme et stopper son action, l'embryon est déposé dans trois ou quatre bains successifs de milieu ultrafiltré PBS + albumine, pendant une durée totale de 10 mn.

Au bout de ces 10 mn, l'embryon est placé dans le premier bain d'agent cryoprotecteur (glycérol 0,5 M pendant 15 mn), puis dans le second bain (glycérol 1 M pendant 15 mn) et enfin dans le troisième bain (glycérol 1,5 M pendant 15 mn).

L'embryon est alors monté en paillette, puis il subit les opérations habituelles pour obtenir sa congélation, de la façon décrite précédemment.

La décongélation est obtenue en plongeant la paillette pendant 1 mn dans un bain-marie à 37°C et on effectue ensuite les opérations de retrait de l'agent cryoprotecteur : l'embryon est placé dans un premier bain de glycérol 1 M + saccharose 0,25 M pendant 15 mn, puis dans un second bain de glycérol 0,5 M + saccharose 0,25 M pendant 15 mn, puis dans un troisième bain (saccharose 0,25 M pendant 15 mn) et enfin dans le milieu PBS + albumine (15 minutes).

L'embryon est alors prêt pour le transfert.

### Exemple 2

On reproduit le protocole de traitement précédent mais on remplace la trypsine à 0,2 % par de la collagénase de type II à la concentration de 2,5 %, pendant 15 mn (dilution également dans un milieu PBS sans calcium et sans magnésium).

### Résultats

### a) Nécrose cellulaire

La nécrose cellulaire désigne les modifications structurales qui suivent la mort d'une cellule ; elle résulte de la dégradation progressive de la cellule par ses propres enzymes contenues dans les lysosomes.
Le pourcentage de cellules nécrotiques est représentatif des dégâts cellulaires causés par les manipulations et il reflète la viabilité de l'embryon.

Cet examen histologique est mené selon la technique décrite par J.F. BRUYAS - 1994 - «Contribution à l'étude de la congélation des embryons équins : une approche métabolique et cellulaire» - Mémoire de recherche Agrégation de pathologie de la reproduction - Ecole Nationale Vétérinaire de NANTES, FRANCE. Il est réalisé avant l'opération de congélation pour déterminer les dégâts cellulaires liés au traitement préparatoire.

Le pourcentage observé de cellules nécrotiques a été le suivant :
a) embryons traités par la trypsine (conformément à l'exemple 1): 11 % (un embryon analysé)
b) embryons traités par la collagénase (conformément à l'exemple 2): 10,3 % (un embryon analysé)
   Ces résultats sont à comparer avec les taux de nécrose d'embryons ayant suivi le même protocole de préparation, sans le traitement enzymatique :
c) embryons sans capsule : 13,9 % (moyenne sur 6 embryons)
d) embryons avec capsule : 30,6 % (moyenne sur 8 embryons)

On remarque donc que les embryons dont la capsule a été traitée par une enzyme subissent moins de dommages que les embryons qui ont conservé leur capsule intacte.
Ces embryons traités se comportent comme des embryons sans capsule.

### b) Tests in-vivo

8 embryons ont été récoltés entre le 5^{ème} et le 8^{ème} jour après l'ovulation selon la méthode de LAGNEAUX et al. décrite ci-avant.
La répartition des embryons récoltés suivant leur âge est la suivante :

| Age des embryons | nombre d'embryons |
|---|---|
| 5,5 jours | 1 |
| 6,5 jours | 1 |
| 7,5 jours | 2 |
| 8,5 jours | 4 |

Les tailles des embryons récoltés sont les suivantes :

| n° embryon | taille (µm) | n° embryon | taille (µm) |
|---|---|---|---|
| 1 | 1020 | 5 | 187 |
| 2 | 714 | 6 | 1581 |
| 3 | 119 | 7 | 1105 |
| 4 | 442 | 8 | 187 |

Ces embryons ont été traités conformément à l'exemple 1 ci-dessus.
Les embryons n° 1 et n° 2 ont subi une décapsulation mécanique après le traitement enzymatique et la capsule des embryons n° 6 et n° 7 a été complètement lysée lors du bain d'enzymation.

Nous disposons donc de deux lots d'embryons:
- un lot n° 1 avec des embryons sans capsule (embryons n° 1, n°2, n° 6 et n° 7), et
- un lot n° 2 avec des embryons comportant une capsule seulement partiellement lysée (embryons n° 3, n°4, n° 5 et n° 8).

Après décongélation, la technique de transfert utilisée a été celle reportée dans TAINTURIER D., BRUYAS J.F., DUMONT P., FIENI F., ESCOUFLAIRE P. (1989, « La transplantation embryonnaire chez la jument, Revue Med. Vet. 140, 1109-1115), qui consiste à déposer l'embryon derrière le col à l'aide d'une seringue de transplantation.
Le contrôle de la gestation a été réalisé par un échotomographe (scanner 100 de Pie Medical, Hospimédi 60790 POUILLY, FRANCE), à 14, 21 et 28 jours.
Les résultats des transferts figurent dans le tableau ci-dessous:

| Lot | n° embryon | DG 14 | DG 21 | DG 28 |
|---|---|---|---|---|
| 1 | 1 | + | - | - |
| 1 | 2 | - | - | - |
| 2 | 3 | - | - | - |
| 2 | 4 | + | (a) | (a) |
| 2 | 5 | + | - | - |
| 1 | 6 | + | + | + |
| 1 | 7 | + | + | + |
| 2 | 8 | + | + | + |
| DG = diagnostic de gestation (à 14, 21 et 28 jours respectivement) | | | | |
| (a) : la jument receveuse a été accidentée après le diagnostic de gestation à J14. Les examens ont alors été stoppés. | | | | |

Les taux de gestation à 14, 21 et 28 jours sont les suivants :

| DG | nombre de gestations/ nombre de transferts | **%** |
|---|---|---|
| à 14 jours | 6/8 | 75 % |
| à 21 jours | 3/7 | 43 % |
| à 28 jours | 3/7 | 43 % |

D'une manière globale, ces taux sont supérieurs à ceux obtenus avec les protocoles que l'on connaissait jusqu'à maintenant ; ils sont similaires aux taux obtenus après transfert d'embryons frais (58 % en moyenne sur les 10 dernières années (CLEMENT F., HOFFERER S., VINCENT P., 1995 « La transplantation embryonnaire chez la jument », Equ'idée mars-avril 17, 56-62).

| Lot n° 1 (embryons sans capsule) | | |
|---|---|---|
| DG | nombre de gestations/ nombre de transferts | % |
| à 14 jours | 3/4 | 75% |
| à 21 jours | 2/4 | 50 % |
| à 28 jours | 2/4 | 50 % |

| Lot n° 2 (embryons avec capsule partiellement lysée) | | |
|---|---|---|
| DG | nombre de gestations/ nombre de transferts | % |
| à 14 jours | 3/4 | 75 % |
| à 21 jours | 1/3 | 33 % |
| à 28 jours | 1/3 | 33 % |

Ces résultats indiquent qu'il est possible d'obtenir des gestations avec des embryons n'ayant plus leur capsule, et qu'il n'y a pas de différence significative entre les résultats des embryons transplantés sans capsule et les embryons transplantés avec une capsule.
Les taux de gestation en fonction de l'âge sont les suivants :

| Age | J14 | J21 | J28 |
|---|---|---|---|
| 5,5 jours | 0/1 | 0/1 | 0/1 |
| 6,5 jours | 1/1 | 1/1 | 1/1 |
| 7,5 jours | 2/2 | 0/1 | 0/1 |
| 8,5 jours | 3/4 | 2/4 | 2/4 |

Ces résultats montrent qu'il est possible d'obtenir une gestation à partir d'embryons congelés âgés de 7,5 jours et plus, en utilisant le procédé conforme à l'invention, alors que cela n'avait pratiquement pas été obtenu jusqu'à maintenant par les procédés connus.
Les taux de gestation en fonction de la taille sont les suivants :

| Taille | J14 | J21 | J28 |
|---|---|---|---|
| <200 µm | 2/3 | 1/3 | 1/3 |
| entre 200 et 500 µm | 1/1 | 0/0 | 0/0 |
| >500 µm | 3/4 | 2/4 | 2/4 |
| >1000 µm | 3/3 | 2/3 | 2/3 |

Ces résultats montrent qu'il est possible d'obtenir une gestation à partir d'embryons congelés ayant une taille supérieure à 500 µm en utilisant le procédé conforme à l'invention, alors que cela n'avait pas été obtenu jusqu'à maintenant par les procédés connus.

L'ensemble des résultats obtenus montre bien l'importance de la capsule embryonnaire dans le processus de cryoconservation des embryons d'équidés. Le procédé conforme à l'invention améliore les taux de gestation à partir d'embryons congelés et il permet d'envisager le développement commercial de cette technologie.

Le traitement de la capsule embryonnaire permet de ne pas se préoccuper du moment de la récolte de l'embryon. En particulier, la récolte peut être réalisée assez tard ; on bénéficie ainsi d'un taux de collecte élevé et l'opération de congélation est réalisée sur des embryons au stade «blastocyste» ce qui leur permet de mieux résister aux agressions des différents traitements.

## Revendications

1. Procédé de préparation d'embryon d'équidé en vue de sa cryoconservation, lequel procédé consiste à préparer l'embryon, après récolte, en le soumettant à l'action d'agent(s) cryoprotecteur(s), puis à le conditionner en paillette avant de lui faire subir l'opération de cryoconservation proprement dite, **caractérisé en ce qu'**il consiste, avant de soumettre ledit embryon à l'action d'agent(s) cryoprotecteur(s), à lui faire subir un traitement approprié pour supprimer la capsule embryonnaire, ou pour augmenter la perméabilité de cette capsule, en vue de renforcer l'action ultérieure dudit ou desdits agents cryoprotecteurs.

2. Procédé selon la revendication 1, **caractérisé en ce qu'**il consiste, après la récolte, à traiter la capsule embryonnaire par une action enzymatique avant de soumettre l'embryon à l'action du ou des agents cryoprotecteurs.

3. Procédé selon la revendication 2, **caractérisé en ce qu'**il consiste, après la récolte, à traiter la capsule embryonnaire en plongeant l'embryon dans un bain de collagénase.

4. Procédé selon la revendication 3, **caractérisé en ce qu'**il consiste, après la récolte, à traiter la capsule embryonnaire par de la collagénase 2,5 %, pendant 15 mn à la température ambiante.

5. Procédé selon la revendication 2, **caractérisé en ce qu'**il consiste, après la récolte, à traiter la capsule embryonnaire en plongeant l'embryon dans un bain de trypsine.

6. Procédé selon la revendication 5, **caractérisé en ce qu'**il consiste, après la récolte, à traiter la capsule embryonnaire par de la trypsine 0,2 %, pendant 15 mn à la température ambiante.

7. Procédé selon l'une quelconque des revendications 2 à 6, **caractérisé en ce qu'**il consiste, après la récolte, à traiter la capsule embryonnaire par un mélange de collagénase et de trypsine.

8. Procédé selon la revendication 1, **caractérisé en ce qu'**il consiste, après la récolte, à enlever mécaniquement la capsule embryonnaire avant de soumettre ledit embryon à l'action du ou des agents cryoprotecteurs.

9. Procédé selon la revendication 8, **caractérisé en ce qu'**il consiste à enlever mécaniquement la capsule embryonnaire après avoir soumis l'embryon à un traitement chimique apte à fragiliser ladite capsule.

10. Procédé selon la revendication 9, **caractérisé en ce qu'**il consiste à soumettre ledit embryon à un traitement enzymatique adapté pour fragiliser la capsule en vue de faciliter son enlèvement mécanique.

## Claims

1. Method for preparing an equine embryo for cryopreservation, said method consisting of preparing the embryo, after collection, by subjecting it to the action of cryoprotectant(s), then of storing it in a straw before subjecting it to the actual cryopreservation operation, **characterized in that** it consists of, prior to subjecting said embryo to the action of cryoprotectant(s), subjecting it to an appropriate treatment to eliminate the embryonic capsule, or to increase the permeability of this capsule, in order to reinforce the subsequent action of said cryoprotectant(s).

2. Method according to claim 1, **characterized in that** it consists, after the collection, of treating the embryonic capsule by enzymatic action before subjecting the embryo to the action of the cryoprotectant(s).

3. Method according to claim 2, **characterized in that** it consists, after the collection, of treating the embryonic capsule by immersing the embryo in a bath of collagenase.

4. Method according to claim 3, **characterized in that** it consists, after the collection, of treating the embryonic capsule with 2.5% collagenase for 15 min at room temperature.

5. Method according to claim 2, **characterized in that** it consists, after the collection, of treating the embryonic capsule by immersing the embryo in a bath of trypsin.

6. Method according to claim 5, **characterized in that** it consists, after the collection, of treating the embryonic capsule with 0.2% trypsin for 15 min at room temperature.

7. Method according to any one of claims 2 to 6, **characterized in that** it consists, after the collection, of treating the embryonic capsule with a mixture of collagenase and trypsin.

8. Method according to claim 1, **characterized in that** it consists, after the collection, of mechanically removing the embryonic capsule before subjecting said embryo to the action of the cryoprotectant(s).

9. Method according to claim 8, **characterized in that** it consists of mechanically removing the embryonic capsule after having subjected the embryo to a suitable chemical treatment to weaken said capsule.

10. Method according to claim 9, **characterized in that** it consists of subjecting said embryo to an appropriate enzymatic treatment to weaken the capsule in order to facilitate its mechanical removal.

## Patentansprüche

1. Verfahren zum Vorbereiten eines Einhuferembryos zu dessen Gefrierkonservierung, wobei das Verfahren darin besteht, den Embryo nach dem Sammeln vorzubereiten, indem er der Wirkung eines oder mehrerer gefrierschützender Wirkstoffe unterworfen und danach in Plättchen verpackt wird, bevor er der dem Vorgang der eigentlichen Gefrierkonservierung unterzogen wird, **dadurch gekennzeichnet, dass** es darin besteht, dass der Embryo, bevor er der Einwirkung des oder der gefrierschützenden Wirkstoffe unterworfen wird, einer zweckmäßigen Behandlung unterzogen wird, um die Embryohülle zu eliminieren oder um die Durchlässigkeit dieser Hülle zu steigern, um die spätere Wirkung des oder der gefrierschützenden Wirkstoffe zu verstärken.

2. Verfahren nach Anspruch 1, **dadurch gekennzeichnet, dass** es darin besteht, die Embryohülle nach dem Sammeln durch eine Enzymwirkung zu behandeln, bevor der Embryo der Wirkung des oder der gefrierschützenden Wirkstoffe unterworfen wird.

3. Verfahren nach Anspruch 2, **dadurch gekennzeichnet, dass** es darin besteht, nach dem Sammeln die Embryohülle zu behandeln, indem sie in ein Kollagenasebad getaucht wird.

4. Verfahren nach Anspruch 3, **dadurch gekennzeichnet, dass** es darin besteht, nach dem Sammeln die Embryohülle mit Kollagenase zu 2,5 % bei Raumtemperatur 15 Min. zu behandeln.

5. Verfahren nach Anspruch 2, **dadurch gekennzeichnet, dass** es darin besteht, die Embryohülle nach dem Sammeln zu behandeln, indem der Embryo in ein Trypsinbad getaucht wird.

6. Verfahren nach Anspruch 5, **dadurch gekennzeichnet, dass** es darin besteht, die Embryohülle nach dem Sammeln mit Trypsin zu 0,2 % bei Raumtemperatur während 15 Min. zu behandeln.

7. Verfahren nach einem der Ansprüche 2 bis 6, **dadurch gekennzeichnet, dass** es darin besteht, die Embryohülle nach dem Sammeln mit einem Gemisch aus Kollagenase und Trypsin zu behandeln.

8. Verfahren nach Anspruch 1, **dadurch gekennzeichnet, dass** es darin besteht, die Embryohülle nach dem Sammeln mechanisch zu entfernen, bevor der Embryo der Wirkung des oder der gefrierschützenden Wirkstoffe unterzogen wird.

9. Verfahren nach Anspruch 8, **dadurch gekennzeichnet, dass** es darin besteht, die Embryohülle mechanisch zu entfernen, nachdem der Embryo einer chemischen Behandlung unterzogen wurde, die dazu geeignet ist, die Hülle brüchig zu machen.

10. Verfahren nach Anspruch 9, **dadurch gekennzeichnet, dass** es darin beseht, den Embryo einer geeigneten Enzymbehandlung zu unterziehen, um seine Hülle zu ihrem erleichterten mechanischen Entfernen brüchig zu machen.
